# EUROPEAN PATENT SPECIFICATION

(11) **EP 1 436 945 B1**
(45) Date of publication and mention of the grant of the patent: **30.07.2008**
(21) Application number: 02797564.8
(22) Date of filing: 03.09.2002
(51) Int. Cl.: H04L 12/00

(54) **TELECOMMUNICATION NETWORK COMPRISING AN SDH/SONET-SUBNET, WHERE THE GMPLS FUNCTION IS INCORPORATED IN A GMPLS SOFTWARE SERVER**
TELEKOMMUNIKATIONSNETZ MIT EINEM SDH/SONET-SUBNETZ, WOBEI DIE GMPLS-FUNKTION IN EINEM GMPLS-SOFTWARE SERVER INTEGRIERT IST
RESEAU DE TELECOMMUNICATIONS COMPRENANT UN SOUS-RESEAU SDH/SONET, DANS LEQUEL LA FONCTION GMPLS EST INCORPOREE DANS UN SERVEUR DE LOGICIEL GMPLS

(30) Priority: 03.09.2001 DK 200101293; 12.09.2001 DK 200101327; 16.10.2001 DK 200101522
(43) Date of publication of application: 14.07.2004
(73) Proprietor: Tpack A/S, 2750 Ballerup (DK)
(72) Inventor: HANSEN, Per, Flemming, DK-2860 Söborg (DK); GORMSEN, Kim, DK-3500 Værlose (DK)
(74) Representative: Grünecker, Kinkeldey, Stockmair & Schwanhäusser Anwaltssozietät
(86) International application number: PCT/DK2002/000573
(87) International publication number: WO 2003/021865

(56) References cited:
- CA-A- 2 299 038
- US-A1- 2002 141 400
- EPSTEIN H ET AL: "Managing optical networks" BELL LABS TECHNICAL JOURNAL, JAN.-JUNE 2001, LUCENT TECHNOLOGIES, USA, vol. 6, no. 1, pages 50-66, XP002223757 ISSN: 1089-7089
- PAULA BERNIER: "The right Blend SUPERCOMM Serves Up Multifunctional Network Platforms" XCHANGE, [Online] 15 July 2001 (2001-07-15), page 1-7 XP002223758 Retrieved from the Internet: <URL:http://www.xchangemag.com/articles/17 2front.html> [retrieved on 2002-12-05]
- BANERJEE A ET AL: "Generalized multiprotocol label switching: an overview of routing and management enhancements" IEEE COMMUNICATIONS MAGAZINE, JAN. 2001, IEEE, USA, vol. 39, no. 1, pages 144-150, XP002223759 ISSN: 0163-6804

## Description

The invention relates in general to GMPLS, i.e. 'General Multi Protocol Label Swappies or Switching' and more particularly techniques for the introduction of GMPLS in the telecommunications transport network in connection with IP Services, especially within the SDH/Sonet network.

GMPLS is today under standardisation and will potentially be introduced in order to achieve a better exploitation of the installed telecommunications transportation network in connection with IP Service.

However, this introduction of GMPLS will necessitate an upgrading of the many existing installed SDH/Sonet Add/Drop multiplexers in a SDH/Sonet network - with the GMPLS topology and reservation software - so that the SDH/Sonet canal resources (VC paths etc.) can enter as visible dynamic allocatable resources in the EP service. Furthermore, these SDH/Sonet Add/drop multiplexers does not necessarily dispose of additional CPU force today to carry out such an upgrading, which will in this case demand a sort of hardware upgrading.

Relevant background techniques within this field are disclosed/described in the following publications: WO 0036871, WO 0171986, Orda A.: 'Routing with end-to-end QoS Guarantees in Broadbank Networks', Chen T.M. et al.: 'Reliable Services in MLPS, US 6.262,989, EP 0 982 902, US 6,215,791, KWEON S-K et al: 'Providing Deterministic Delay Guarantees in ATM Networks', EP 0 969 621, EP 1 122 971, EP 1 087 576, EP 1 052 859, US 6,154,444, EP 0 753 979, WO 0184272. In this connection reference is made to these references.

Epstein H et al: "Managing optical networks" Bell Labs Technical Journal, Jan.-June 2001, Lucent Technologies, USA, vol. 6, no. 1, pages 50-66, ISSN: 1089-7089 concerns the issue of managing optical networks and specifically discusses an optical network navigator system (ONNS) that enables a distributed network-wide control plane that specifically addresses core network requirements for wavelength provisioning and restoration. The ONNS system was designed to provide an intelligent optical core network that adds intelligence to a carrier's optical infrastructure, thereby transforming optical facilities from point-to-point pipes into a resilient manageable optical network. The ONNS is a network that interconnects wave division multiplexer system, performs automatic network topology discovery, interconnects with carrier server nodes, such as ATM switches, IP routers, SONET add/drop multiplexers and optical ADMs. New applications that integrate connection management across technologies will provide flow-through operations that integrate IP router and multi-server switching with optical and STM switching. The OSM functionality can co-reside on a single management server platform in a small network or be distributed over a number of servers in larger networks. Although it is mentioned that OSM provides services to enable flow-through automation of service fulfillment processes, it is further suggested that when an element such as an Nex-abit64000 or GX550 has a UNI transport interface to a LambdaRouter network, it can send a connection request to the optical network via a UNI signaling interface which is used by ONNS. Here, OSM provides only authentication, authorization, accounting and user SLA to enable ONNS route connections.

Banerjee A et al: "Generalized multiprotocol label switching: an overview of routing and management enhancements" IEEE Communications Magazine Jan. 2001, IEEE, USA, vol. 39, no. 1, pages 144-150, ISSN: 01636804 discloses an overview of routing and management enhancements of generalized multiprotocol label switching.

It is therefore the object of the present invention to provide an improved telecommunications network comprising an optical transport network reducing the costs of upgrading the hardware and software functionalities.

This object is solved by the subject matter of the independent claim.

Preferred embodiments are defined by the dependent claims.

It is an aspect of the present invention to enable the introduction of GMPLS without the necessity of upgrading all of the distributed SDH/Sonet Add/Drop multiplexers with the necessary and relatively complex GMPLS software.

This aspect is achieved by using a central approach, in which a GMPLS Proxy agent is used to run the GMPLS software for an entire SDH/Sonet sub-network and using existing management centre software for dynamical setting up of SDH/Sonet paths.

Thus, it becomes technically easier to introduce GMPLS, i.e. it demands less upgrading and less technical resources.

The background of the invention and the advantage of the technical solution characteristic of the invention will appear from the following description.
Figure 1 illustrates the technical solution underlying an embodiment of the present invention;
Figure 2 illustrates a telecommunications net;
Figure 3 shows different physical components entering into the telecommunications network;
Figure 4 shows the embodiment of Figure 3, where components from the transport network itself are removed;
Figure 5 illustrates an IP router;
Figure 6 illustrates that all the IP packages pass through a number of IP routers on their way;
Figure 7 shows the access of a user to his/her wanted WEB host;
Figure 8 illustrates an IP infrastructure;
Figure 9 illustrates a tendency of a few stretches of the IP infrastructure being overloaded;
Figure 10 illustrates that it is possible with MPLS to consider the overlapping of each link;
Figure 11 illustrates components that an IP package must go through in the physical network;
Figure 12 illustrates that the GMPLS permits a selection of more direct paths;
Figure 13 illustrates a physical IP/GMPLS view;
Figure 14 shows an MPLS package switch;
Figure 15 illustrates that add/drop multiplexers are not based on package transport;
Figure 16 illustrates a functionality which can convert between an MPLS-based package and GMPLS time multiplex technologies;
Figure 17 illustrates the use of a GMPLS Proxy Agent;
Figure 18 illustrates the management centre software;
Figure 19 shows an occasionally selected OTN;
Figure 20 shows two different examples of VN hiding the topology of the OTN of Figure 19;
Figure 21 illustrates a database that may be present in each of the IP/MPLS routers;
Figure 22 shows another example of a distributed IP/MPLS database;
Figure 23 shows an example of the issue in which the physical IP/MPLS router network is connected to the physical OTN;
Figure 24 illustrates a more simple virtual network topology according to one aspect of the invention;
Figure 25 illustrates available bandwidth in OTN;
Figure 26 shows a system for scheduling data traffic according to the present invention;
Figure 27 shows an algorithm for the distribution of data traffic between a delay unit and a priority unit;
Figure 28 shows a possible implementation of a delay unit; and
Figure 29 shows a possible implementation of a priority unit.

By way of introduction a presentation of a general introduction to the basic technologies which are of an importance to the invention is given.

Firstly, the structure of the telecommunications net and the technologies which are relevant is introduced. Subsequently, the IP problem presentation that has lead to the international standardisation worlds introduction of the next generations IP technologies, named MPLS and GMPLS, is described.

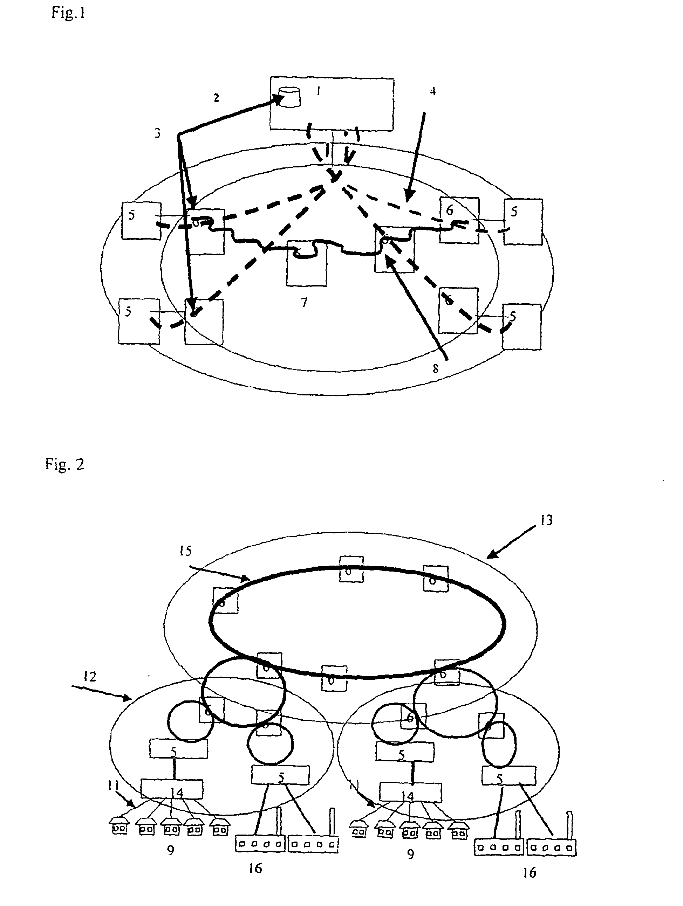

The telecommunications net, as shown in Fig. 2, can physically be divided in three parts:
- The connections to the home users and the companies.
- The Access network for the concentration of the user connections.
- The trunk network which forms the basis of the world wide telecommunications net.

A few years ago, the home users connected themselves to the telecommunications network through relatively slow telephone based modems, and hereafter the ISDN was introduced with connections of up to 128 kbit/s, and today the ADSL and cabel TV network is on the point of lifting this level at 2 Mbit/s and 512 kbit/s, respectively.

Home users are mainly connected to the Internet to have World Wide Web access, but home based working places are also commonly widespread, where the Internet serves as an extension of the companies' local network (Intranet).

For years, the market has focused on the development of new technologies which can offer new services and improve the bandwidth for the home users by using existing telephone connections as well as cable TV network on the last stretch. The background for this is that the establishing of new cables to the home users involves considerable investments, especially for the burial.

Similarly, the companies connected themselves a few years ago through a fixed low-end line, whereby the level was increased to 2 Mbit/s and the Ethernet technology is on the way with 10 Mbit/s, 100 Mbit/s and 1 Gigabit/s per connection.

Ethernet is the technology which is typically used within the companies' local network (LAN). This technology is now seriously on its way into the Access part of the telecommunications network being a very economical technology which is more easy to integrate into the local network of the companies.

The use of the Ethernet technology in the Access network will potentially demand the establishing of new fibre based connections, Investments in cable replacements for companies are more paying compared with the home users, the market of Intranet traffic being approximately 4.5 times as large as the market of Internet traffic.

The Access network is, as shown in Fig. 2, based on a SDH/SONET transport network built up of ring structures. This network is basically optimised towards the transport of traditional telephone traffic. In order to be able to offer data services, an IP structure consisting of IP routers, ATM switches and Frame Relay switches has subsequently been built on to the transport network.

In the future the focus will change from an optimisation of traditional telephony to the optimising of IP traffic. MPLS and GMPLS are IP technologies, which integrate the data technologies with the transport network in a considerably better and more cost-optimal way.

The trunk network constitutes the backbone of the telecommunications network. It is mainly built up of strong backbone SDH/SONET rings. In modern times, this has been combined with DWDM equipment which makes it possible to send many SDH/SONET signals in through the one and same fibre, and thereby multiply the bandwidth capacity per fibre stretch. In the future purely optical switches will also be introduced in the trunk network

The IP network is today built up as a global world wide IP service which is established in the form of an IP router infra structure which is connected through the telecommunications transport network itself.

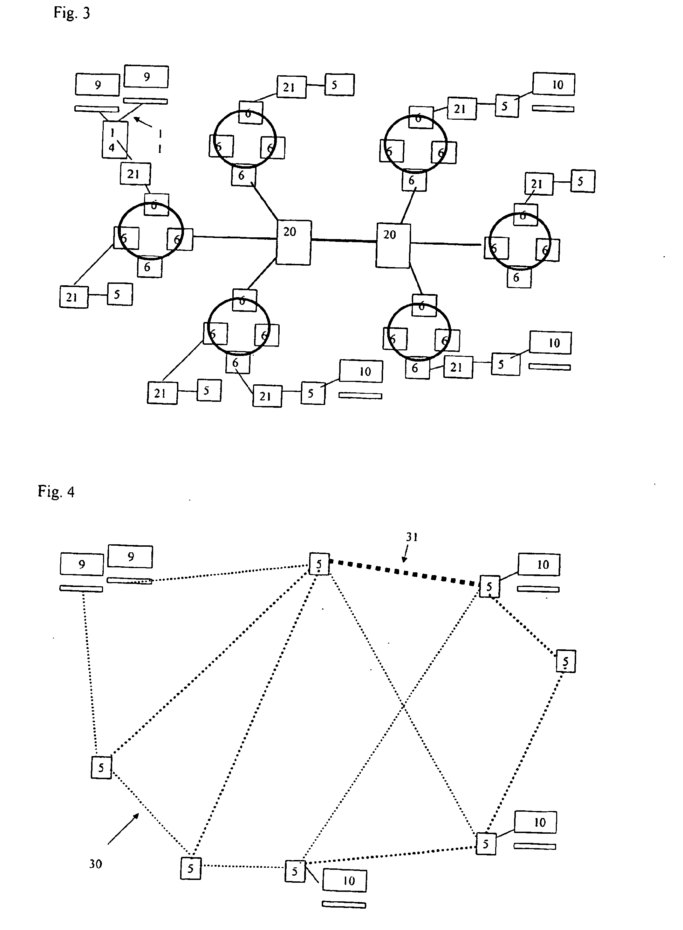

Fig. 3 shows the different physical components which enter into the telecommunications network and which is illustratively divided in the transport network itself, the external circle, and on to this a data service, the inner circle, which includes IP.

The global IP service is illustrated as a number of IP routers which are typically connected through a number of ATM switches on top of the existing fibre based and world wide transport network which consists of SDH/SONET multiplexers DWDM multiplexers and optical switches.

The users and the applications who wish to connect themselves to the Internet through ISP's (Internet Service Providers) can be connected through several different types of connections - but are in Fig. 3 shown either as ADSL connections, that are connected through a ADSL DSLAM, or directly through an Ethernet connection. It is especially these technologies which are expected to be predominant in future.

The IP routers are mutually connected through fixed switched logical connections over the transport network. Fig. 4 shows this, where the components from the transport network itself are removed. The fixed switched logical links are illustrated with dotted lines 30, 31. These are links of a relatively large bandwidth, typically 155 Mbit/s or more, which are to be dimensioned to 'busy hour' load. Attention is drawn to a single connection and has a larger bandwidth than the other ones (se later).

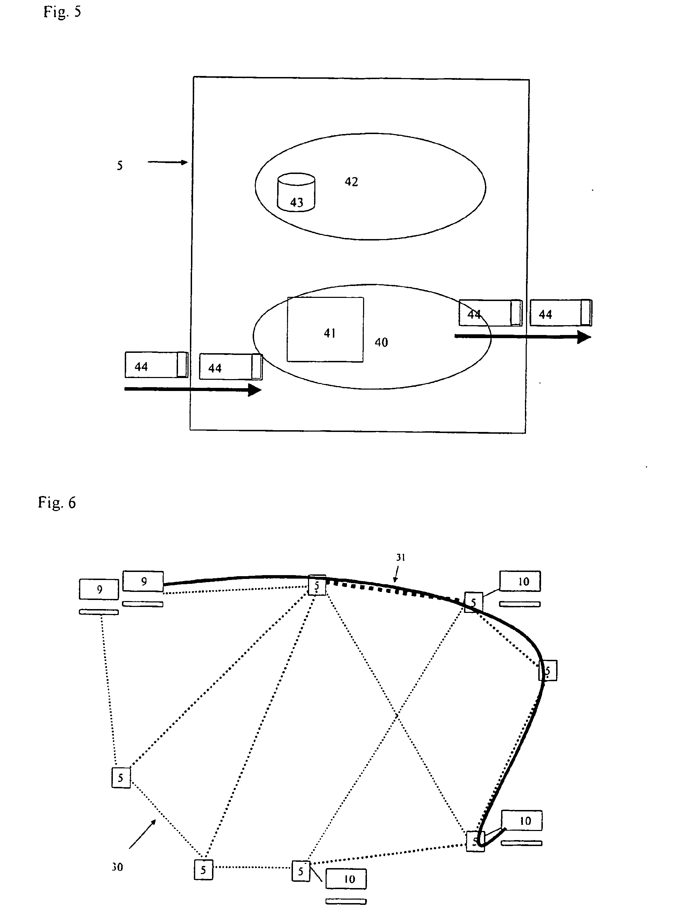

The forwarding of IP-packages is taken care of by IP routers. Figuratively speaking, an IP router can be compared to a post office, shown in Fig. 5. The post office sorts and forwards letters on the basis of the address on the envelope. An IP router sorts and forwards data packages on the basis of an IP header in the front of the package which contains the address of sender of the IP and the address of the addressee of the IP.

If a post office is overloaded it breaks down which is a known Christmas phenomenon where everybody sends a lot of letters. This issue can be compared with the problems which exist in the IP net of today, only in a much larger scale and with daily overloading situations.

Furthermore, the post offices have an express delivery letter service so that particularly important letters also reach their destination in periods of overloading. The traditional IP routers only have a similar possibility to a very small extent and this facility is to be much extended during the coming years.

As it is illustrated in Fig. 5, an IP router logically consists of a set of software which controls the network topology (the structure) as well as hardware forwarding IP packages based on address references in tables calculated by the software.

The software in every IP router exchanges continuous topology information with one another through a standardised IP topology protocol, where OSPF is currently very used. By means of OSPF, every IP router obtains an updated knowledge of the entire network's actual structure - the image of this network is collected in a distributed database in every IP router.

The database contains information on all the IP routers as well as information on the links which connect them mutually. All links are configurated with a distance value that makes it possible to calculate the shortest distance to every known IP address of the node. From the database, each IP router independently calculates a local address table, where all of the IP addresses known within the network can be viewed and as a result tell how an IP package can be forwarded to the next 'hop' on its way to a given IP receiver.

When a user logs on to a web page on the Internet from his/her own PC, a lot of packages are sent between the user's PC and the WEB host machine, which is typically placed somewhere in the world. All the IP packages pass through a number of IP routers on their way, as is illustrated in Fig. 6 by means of the black line drawn up. As an example of this can be mentioned that to go from one home PC to the home page of Intel.com, a large number, such as 14 or more 'hops' must be passed.

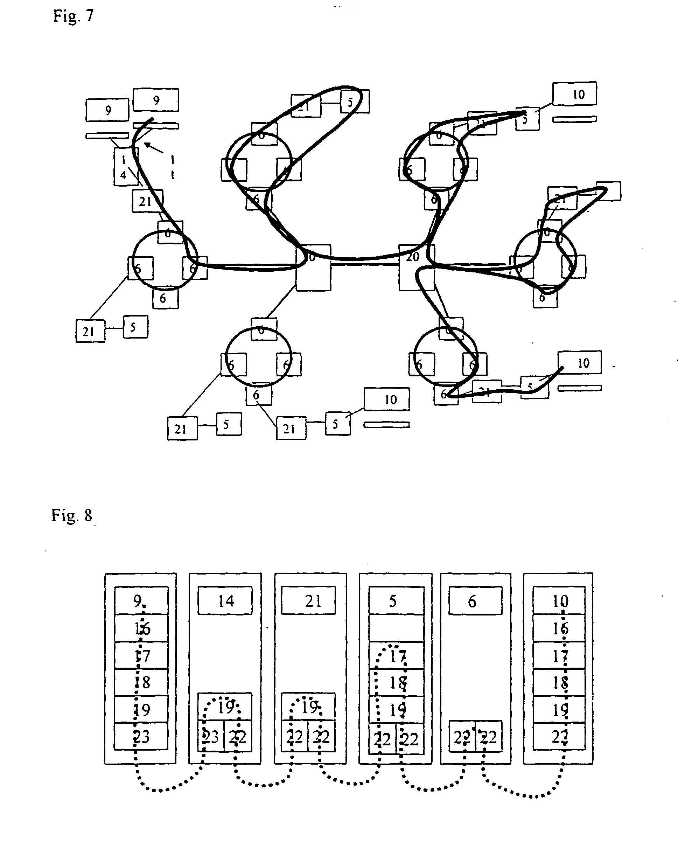

This logical way is only one part of the explanation - the physical way complicates the story substantially. Fig. 7 shows the access of the same user to his/her wanted WEB host, but now both the transport components and the data service layer is shown. This is to illustrate that there are a many components that the IP packages are to go through on its way.

The complexity of the IP is illustrated in Fig. 8 which shows the different protocol layers for the connection from User1 to WEB Host 2 (owing to consideration of space a single ATM switch 21, Add/Drop multiplexer and IP router is shown).

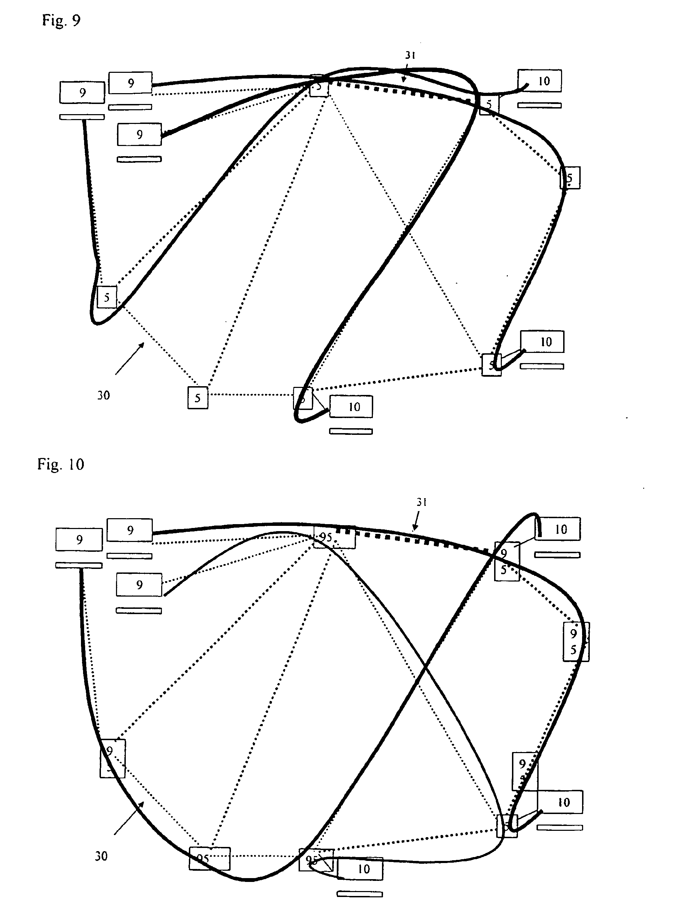

The IP protocols are arranged in such a way that they always attempt to send an IP package by the shortest way to the final receiver. This takes place without consideration to the possible overloading of the individual IP router links. Thus, there is a tendency, as shown in Fig. 9, of a few stretches of the IP infra structure being especially overloaded, whereas other stretches are in general unused.

This gives a poor general router link exploitation, which is inappropriate. Apart from that there are great problems of overloading of the IP network, which has become a yet bigger problem due to the many new IP services in the form of voice and video applications etc. making demands as to maximum delay and demanding the availability of a minimum bandwidth. The existing IP protocols cannot solve this issue.

MPLS is the new IP package technology described in the above mentioned two WO publications and which are developed within the international standardisation over the last couple of years with a view to solve the basic problems within the IP infrastructure concerning scaling, order of priority, queue formation and delays as a consequence of the growing offer of different kinds of IP services (telephony, data, video). As shown in Fig. 10, it is possible with MPLS to consider the overloading of each link.

According to a White Paper from Marconi, some service providers have expressed that they loose up to 40% of their network capacity when traditionally IP routing compared to what they can achieve with MPLS.

Furthermore, the traditional IP routings protocols have, in overloading situations only to a small extent the possibility of giving priority between different types of IP packages. All IP packages will experience delays, regardless of the type is IP telephony, mission critical data transport or just ordinary Web browsing. Thereby, the network can not be used for e.g. a global IP telephony service.

In order to be able to give priority to each IP package from a point of view of traffic type, the so-called IP diff. service function has been developed, which IP diff. service function can give priority to and classify IP packages. When combining MPLS with IP diff. service, the infrastructure is utilised in a more appropriate way, partly by being able to send high priority traffic by non-overloaded stretches, and partly by being able to giving a lower priority to less important packages.

Technically, the MPLS technology solves the above problems by being able to combine traditional IP routing with a new way of IP transmission, in which especially classified IP packages are sent through the net through dynamically allocated logic IP tunnels and in which the individual logic IP tunnel guarantees to observe a more precisely specified package traffic contract regarding delay, bandwidth, error rate etc.

This is achieved by reserving/allocating the necessary network resources already at the layout of the logic IP tunnels. An IP tunnel will be refused at the layout if the necessary resources are not available. These IP tunnels can run transversely to a network with numerous technologies, including Ethernet, Frame Relay and ATM.

When an IP package is sent into an IP tunnel it is provided with as label in the front of the package. Within the interior of the MPLS network the package will therefore only be switched and treated on the basis of this label which is more simple, as an analysis of the entire header of the IP package is not necessary to determine which tunnel and which class the package belongs to. At the end of the IP tunnel, the label is removed from the package after which the package is forwarded as an ordinary IP package in a traditional IP network.

Apart from the IP Ethernet packages can be sent through a MPLS tunnel. This feature is among other things suitable for establishing logic Ethernet connections between a company's departments.

Although the above-mentioned can maybe seem as small modifications it demands, however, considerable fundamental changes in the underlying IP technology, which demands new hardware and new ASIC's in the IP router systems.

Moreover, software has to be updated, the software heavy IP routing's topology protocol has been extended. In the standardisation the OSPF is updated to OSPF-TE, which enables that the distributed database previously mentioned can now also keep control with available bandwidth on each and every link in the IP network. Furthermore, a new protocol called RSVP-TE is used for setting up the MPLS tunnels through the net and reserving the wanted bandwidth.

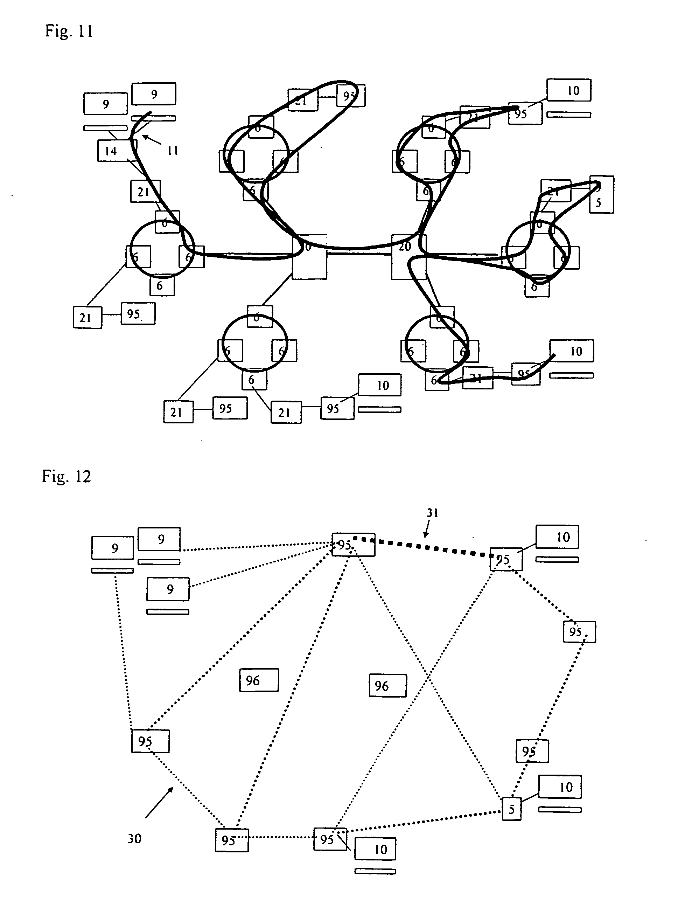

As shown in Fig. 11 there are still a lot of components that an IP package must go through in the physical network, even after the introduction of MPLS. In the example it is the same components as for traditional IP.

Especially regarding the type of MPLS tunnels which have a constant bandwidth, it is not optimal to have to go through the IP/MPLS routers' package hops with attendant delay as well as delay variation.

This is to be seen in connection with the optical transport network (SDH/SONET etc.) being exactly created to be optimal regarding delay and delay variation. Furthermore, in the event of cable breaks, it is difficult within IPIMPLS to achieve protection switch times of a maximum of 50 ms that are known form the optical transport network.

The GMPLS which is currently under standardisation will enable the withdrawal of the transport network's components in the IP/MPLS dynamic, which will enable a visualisation at IP level of systems such as SDH/SONET Add/Drop multiplexers, DWDM equipment as well as Optical switches.

Thereby the IP tunnels can be combined with time multiplexed SDH/SONET tunnels as well as optical wavelength/frequency multiplexed tunnels.

As shown in Fig. 12 the GMPLS permits a selection of more direct paths because many of the fixed switched logic IP/MPLS router links can be substituted by shared, shorter and thus cheaper fixed logic links between the GMPLS components.

The more fine-meshed the 'spider web' can be made between the GMPLS components, the more effective and economically attractive a network is achieved as a marketer of services. As a technology, the GMPLS opens up for the possibility for this at a considerably cheaper price, as the transport part already constitutes a very large part of the network.

In order for the transport component to be GMPLS enabled, i.e. enter into the IP/MPLS topology, it requires that it is provided with GMPLS software (OSPF-TE and RSVP-TE).

It is also alternatively possible to let a shared management system participate with the GMPLS software as a proxy for an entire transport network. This is practical as the transport network is currently centrally controlled. This further enables a faster introduction of the GMPLS into the transport network.

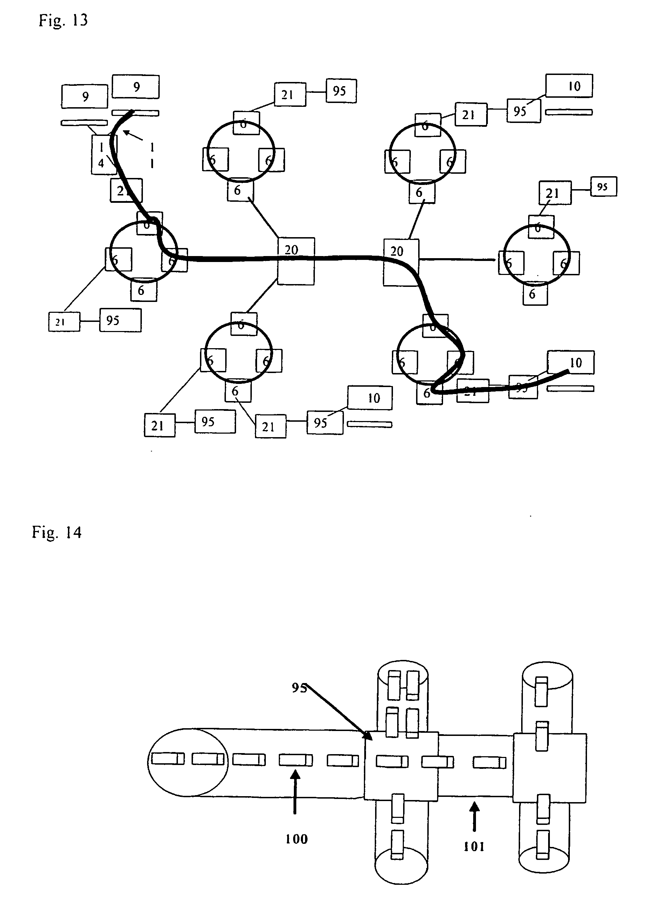

As shown in Fig. 13 with the physical IP/GMPLS view is to show, it is not necessary that all transport components are withdrawn as GMPLS enabled which enables a gradual updating to GMPLS.

To achieve an optimal utilisation of the GMPLS a component at the transition from MPLS to/from GMPLS is required as to the hardware, which is to be able to convert between the two different technologies.

Fig. 14 shows an MPLS package switch in which different MPLS tunnels are packed interleaved between each other.

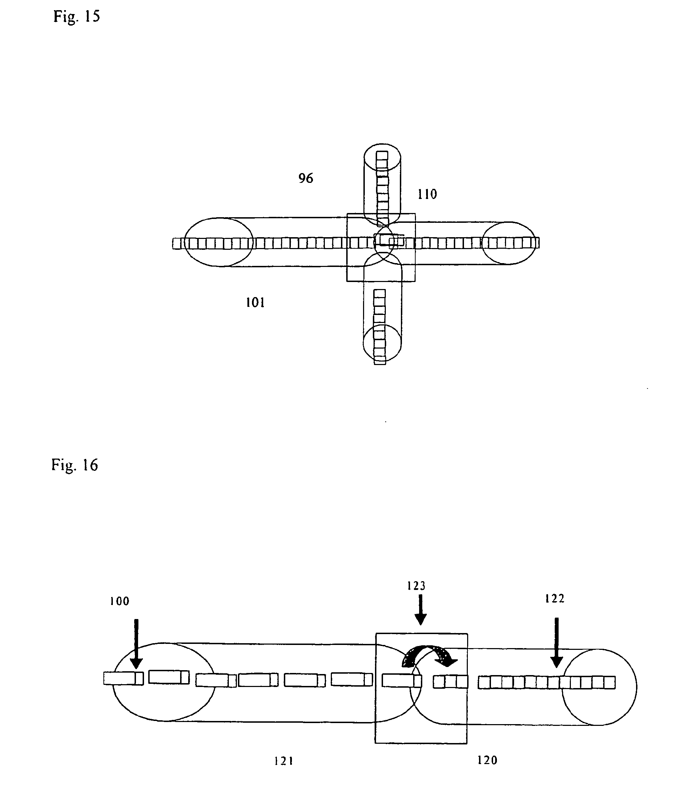

Add/drop multiplexers are not based on package transport but are based on time multiplexing of logic channels, where the individual channels are fixed temporally BYTE interleaved between each other. This is illustrated in Fig. 15.

In order for a MPLS based package technology to be able to function together with a GMPLS time multiplexed technology, it will be necessary to establish a functionality which can convert between these two technologies, cf. the illustration in Fig. 16.

As shown in Fig. 16, a component that can redistribute the package channels to the time multiplexed byte channels is needed.

This is further complicated by the fact that within the SDH/SONET a virtual concatenation concept has just been introduced, in which a number of time multiplexed byte channels can be aggregated to a single channel, hereby rendering it possible to obtain several steps in possible bandwidth per channel.

However, this requires that equalisation buffers are implemented on the reception side, as the different aggregated sub-channels can run through different paths throughout the net due to the protection switching mechanisms in the transport network and therefore do not delay each BYTE similarly.

As the transport of IP traffic is growing with 100% a year it is natural that the transport network is optimised as regards the IP service.

Concurrently with the IP being on its way to be the actual transport service of the future, it is naturally in the interest of the supplier of transport equipment to optimise their equipment for the transport of IP traffic, so that the IP router suppliers do not take over and replace the entire transport service.

Furthermore, it is in the interest of the operators that the very considerable investments which have been made in transport equipment are utilised as optimally as possible for the IP traffic of the future.

It would be a very expensive solution if the entire transport network at a standardisation and a development level had to be replaced with other completely new and pure IP technologies, which in any event should have many of the current basis characteristics of the transport network.

With the GMPLS a far better utilisation of the existing transport network's resources is achieved in connection with IP, which from an economical point of view is a much more essential argument for the primary target group of the GMPLS technology, i.e. the suppliers of the transport services and the data service services (the telecommunication operators and the ISP's).

With the introduction of the GMPLS a possibility of a large product differentiation is obtained, in which all the interested parties of the market, both the data/router interested parties and the transport interested parties can optimise the products regarding the optimal supplying of the IP services of the future, where the data service advantages can be combined with the transport service advantages.

There are, in particular, many possibilities in being able to offer data service add-ons to already installed transport network products which will cohere in a global IP/MPLS/GMPLS service.

The GMPLS enables for example that new services such as 'bandwidth on demand' will be introduced, in which a final user/company itself can increase the VPN bandwidth during only seconds instead of, as today, where it can take up to a month to change this.

Illustratively speaking it can be illustrated as follows: While the MPLS as a technology focuses on the data service - and thereby on the router suppliers - the GMPLS will, as a technology, withdraw and thereby focus on the suppliers of telecommunications transport equipment.

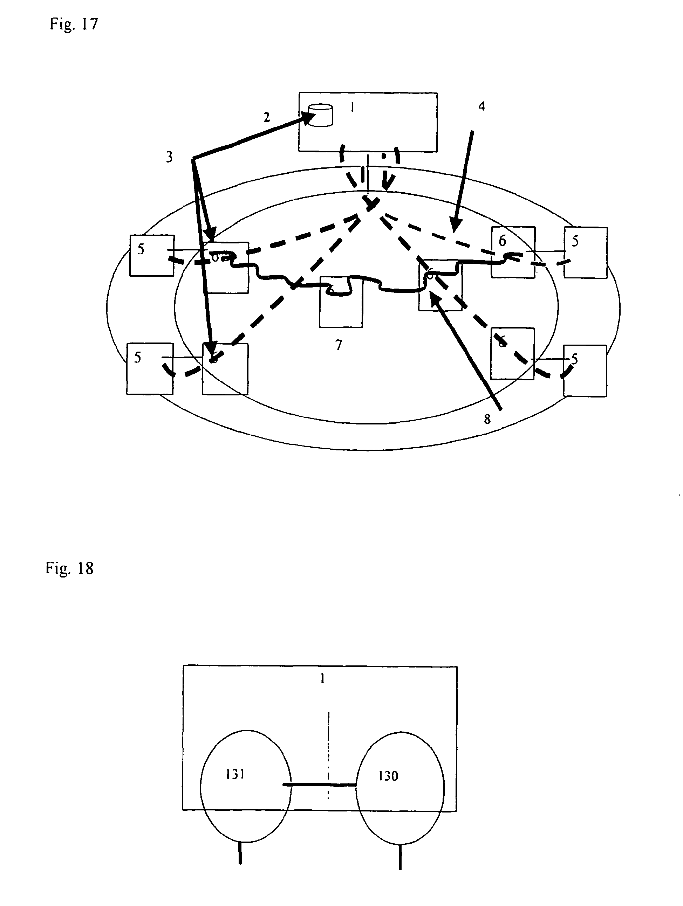

As shown in Fig. 17 the'GMPLS Proxy Agent' can be used in connection with the introduction of the GMPLS in the telecommunications transport network in connection with the IP service, especially in the SDH/Sonet network.

As mentioned previously the GMPLS will require an upgrading of the many already installed SDH/Sonet Add/Drop multiplexers in a SDH/Sonet network - with GMPLS topology and reservations software - so that theSDH/Sonet channel resources (VC paths etc.) can enter as visual dynamic allocatable resources in the IP service. In addition, these SDH/Sonet Add/Drop multiplexers do not necessarily dispose of the additional CPU power to carry out such an upgrading, which in this case will demand a sort of hardware upgrading.

Instead, the 'GMPLS Proxy Agent' enables the introduction of GMPLS without necessitating the upgrading of all of the distributed SDH/Sonet Add/Drop multiplexers with the necessary and relatively complex GMPLS software. The reason for this is that a central approach is used, in which the GMPLS Proxy Agent can take care of the running of the GMPLS software for an entire SDH/Sonet sub-network and uses existing management centre software for the dynamical setting up of SDH/Sonet paths.

This will ease the introduction of the GMPLS considerably.

Today, the SDH/Sonet sub-network is typically controlled and configurated from a central management centre. Paths (VC paths) through the SDH/Sonet sub-network are configurated relatively statically, typically by an operator/person clicking on a window on a screen at the central management centre. The operator/person marks from where to where a VC path is to be created, after which the management communications software communicates with the involved SDH/Sonet Add/Drop multiplexers.

In the 'GMPLS Proxy Agent' this existing management software is utilised, thus not changing the way of configurating the individual SDH/Sonet Add/Drop multiplexer is configuratet regarding the layout of the VC paths.

In the 'GMPLS Proxy Agent' a GMPLS software server is introduced simultaneously for an entire SDH/Sonet network. GMPLS topology and reservations packages are collected from the edge of the SDH/SONET network and forwarded from here to the central GMPLS software server. Thus, this GMPLS software talks with the IP surroundings on behalf of the SDH/Sonet network. When starting up a small number (not necessarily all) of SDH/Sonet resources are dynamically at the disposal of the IP service. Hereafter, it is the GMPLS software's task to distribute knowledge about these resources out into the IP/MPLS network. When the IP/MPLS service at a moment through reservation protocols asks to reserve a GMPLS tunnel in through the SDH/Sonet network, the GMPLS software receives these requests and asks the existing management centre software for help to set up a wanted SDH/Sonet tunnel - after which this, through its existing management protocols communicates down into the relevant SDH/Sonet Add/drop multiplexers so that the SDH/Sonet tunnel is set up.

All in all this means that within the 'GMPLS Proxy Agent', the installation of some MPLS/GMPLS enabler cards on the edge of the SDH/Sonet network has to be carried out - e.g. where the IP/MPLS routers are connected to the SDH/Sonet network. These enabler cards forward the GMPLS topology and reservations packages up to the central GMPLS software server. The 'GMPLS Proxy Agent' therefore also demands the installation of a GMPLS software server which can partly communicate with these enabler cards, but also with the existing management centre software - which maybe has to be upgraded in order to offer this.

The 'GMPLS Proxy Agent' covers two solutions:
1) where the GMPLS software is physically included on the central management centre software, i.e. translates it into the management centre.
2) where the GMPLS software is physically separated on its own management server which then, e.g. through a TCP connection communicates with the existing management centre.

In Fig. 18, the management centre software is illustrated very simply, which in this case is extended with the GMPLS function. Fig. 18 shows typical protocols used in connection with GMPLS: ISIS-TE, RSVP-TE, OSPF-TE, and possibly BGP4.

In accordance with the invention it is not considered which specific protocols have to be used as reservation protocol and topology protocol in connection with GMPLS.

Instead, the invention covers all these plus coming protocols, the main object of the invention being to cover the features of collecting the GMPLS software function centrally (possibly in a few pieces to cover redundancy) for a whole SDH/Sonet sub-network instead of distributing the GMPLS software out into all the SDH/Sonet Add/Drop multiplexers.

Another aspect of the invention relates to a representation of an arbitrarily large optical transport network (from now on mentioned OTN) to the surroundings with a virtual network (from now on mentioned as VN), where:

VN represents OTN to the surroundings as a more simple network topology which hides the inner topology of the OTN, so that it is not visible in VN. VN conserves the same external connection points as to OTN.

The invention specifically relates to the method of calculation in which you dynamically, on the basis of knowledge on possible bandwidth in OTN between external connection points, can convert this to available bandwidth in VN.

This is of importance in connection with the integration of IP/MPLS network as well as OTN, according to which one in the future wants to be able to signal and set up an IP/MPLS connection through OTN without the IP/MPLS network knowing the inner topology of the OTN, but where only the external connection points with the OTN are published in the IP/MPLS router topology.

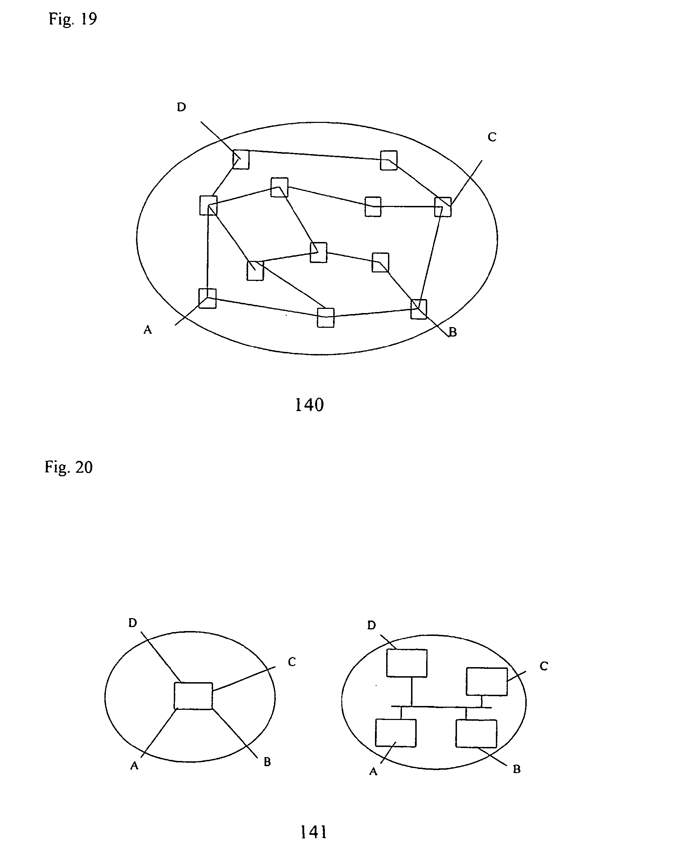

Fig. 19 shows an occasionally selected OTN while Fig. 20 shows two different examples of VN hiding the topology of the above-mentioned OTN, but keeping the same external connection points. The last requirement on the best possible preserving of potential bandwidth between two arbitrarily selected connection points, e.g. A-B is not shown and will be described later.

In accordance with the invention it is essential to understand the signification of being able to represent OTN as a more simple VN in an IP/MPLS network while simultaneously preserving the overview in the best way in VN on potentially available bandwidth between two arbitrary external connection points to OTN. This is why the functioning of an IP/MPLS router network is briefly to be explained regarding the calculation and the setting up of a connection through an IP/MPLS network.

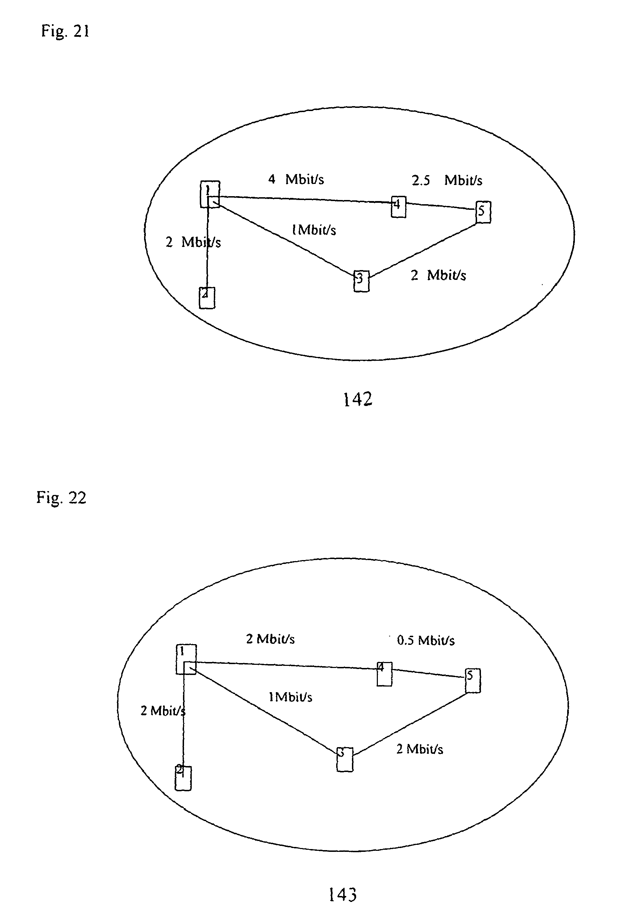

An IP/MPLS network consists of a number of IP/MPLS routers that are connected through a number of links. In this IP/MPLS network a dynamic database is maintained, which database controls the amount of available bandwidth per link in the IP/MPLS network. This database is present in each of the IP/MPLS routers, vide Fig. 21.

Suppose that a reservation/establishing of a connection of 2 Mbit/s in Fig. 21 is wanted between IP/MPLS router 1 and 5. After establishing/signalling such a connection, the distributed IP/MPLS database will change so that there are 2 Mbit/s less available bandwidth between router 1 and 5, vide Fig. 22.

In connection with the development of the optical transport network consisting of optical switches and SDH/Sonet Add/Drop multiplexers and development of the amount of traffic of IP/MPLS, a wish of enabling the IP/MPLS network to dynamically being able to set up connections through the optical network in the standardisation organisations exist, without the inner topology of OTN being published to the IP/MPLS routers. However, it is necessary that the IP/MPLS routers know the external connection points to the OTN, so that a connection can dynamically be signalled through OTN between two such points. A protocol for this purpose is among other things under standardisation within the OIF (Optical Internet Forum) and in IETF (Internet Engineering Task Force).

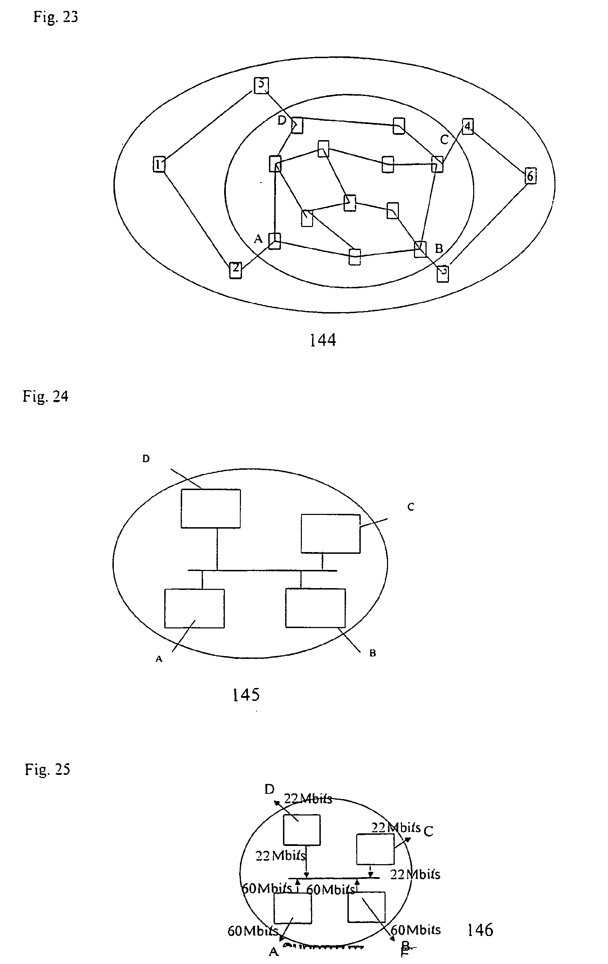

An important and unsolved question in connection with the IP/MPLS routers is, towards the IP/MPLS routers and thereby in their distributed network topology database, how to represent OTN as a more simple virtual network topology (VN) which partly hides the inner topology of OTN and partly conserves the same external connection points, and which in the best way conserves possible available bandwidth between these external connection points in through the OTN. Fig. 23 shows an example of this issue, in which the physical IP/MPLS router network is connected through the physical OTN.

A way of representing OTN towards the surroundings with a VN network, where there are as many nodes in VN as there are external connection points in OTN and where all these nodes in VN are mutually connected in pairs in a fully meshed topology. However, this scales poorly when the number of connection points grow.

In accordance with the invention, a hiding of the inner topology of OTN is carried out in an optical transport network (OTN) of an arbitrary topology with the below mentioned and shown more simple Virtual Networks (VN) topology (vide Fig. 24): A VN consisting of as many nodes as there are external connection points in the OTN that it represents. These nodes are connected together in VN of a single shared link (in OSPF and ISIS terminology called a shared medium), and every node in VN has an external connection point to the surroundings.

In order for the VN to be represented to the IP/MPLS routers, an available transmit bandwidth out of the link must be calculated in accordance with the IP/MPLS routing protocols (e.g. OSPF-TE and ISIS-TE) per link in VN.

The used algorithm is as follows:

It is supposed that OTN towards the surroundings makes a function (hereafter called FN(x,y)) available, which function dynamically gives information on the size of a further connection (measured in bandwidth, VC12, VC3, VC4, wavelengths or the like) which could possibly be created between two arbitrary external connection points (x and Y) of OTN.

The algorithm utilises the fact that FN(x,y) will return the same as FN(y,x) to a given later moment, because OTN connections are bi-directional. Furthermore, the algorithm utilises that for the OTN to a given time it applies that FN(x,y) will always be larger than or equal to the minimum of FN(x,z) and FN(z,y).

By means of the above-mentioned function FN(x,y), the algorithm hereafter firstly carries out a finding of the two external connection points, which in the OTN at the given time enables the largest connection bandwidth possible. Let us name these two found connection points z1, z2.

In the VN, the above mentioned two connection points are represented out towards the surroundings with the found (largest) bandwidth. Simultaneously, the link is represented from the belonging two nodes in the VN towards the shared link with the found bandwidth.

Hereafter, one of these two connection points are arbitrarily used in the algorithm, e.g. z1, and with this as a starting point, the bandwidth to each of the rest of the connection points are calculated in tum by means of the OTN FN(z1,y) function.

The found bandwidth is used at the belonging connection point in VN against the surroundings as well as on the accompanying link towards the shared link in the same node.

Hereafter, it is finally checked in the algorithm, on each of the external connection points towards the directly attached IP/MPLS routers, if the calculated bandwidth is smaller than the physically available amount towards the attached IP/MPLS router. The minimum of these two bandwidth values are then selected as available bandwidth in the external connection point.

Hereafter, the selected VN including available link bandwidths are notified out into the IP/MPLS router network as representative for OTN and thereby ends in the distributed topology database which is present in the IP/MPLS routers.

### Example:

Suppose that an OTN can be represented by a VN with 4 external connection points called A, B, C and D. Suppose that the function FN(x,y) returns the following available bandwidth between the two external connection points:

| | B | C | D |
|---|---|---|---|
| A | 60 Mbit/s | 22 Mbit/s | 22 Mbit/s |
| B | | 22 Mbit/s | 22 Mbit/s |
| C | | | 30 Mbit/s |

As the calculation algorithm describes, the OTN path that has the potentiality of the highest bandwidth, i.e. A-B having 60 Mbit/s, is firstly selected. This is why the external connection points, called A and B, are each given 60 Mbit/s in the example below on VN. Furthermore, the bandwidth in towards the shared link from the node with A and B are also each given 60 Mbit/s.

According to the calculation algorithm, the next step is to use A as a basis and calculate the available bandwidth to each additional external connection point with the F(A,y) function. The available bandwidth from A to C in OTN, i.e. 22 Mbit/s is used as the bandwidth which is to be represented on the basis of C in Fig. 25. Furthermore, 22 Mbit/s are given in towards the shared link in the node with C. Hereafter, the bandwidth value from A to D in OTN can be observed and is filled out the same way as D and C, in this case also 22 Mbit/s.

Hereafter, the four selected external bandwidths are checked separately in order to state if they exceed what is physically available out towards every directly attached IP/MPLS router, (e.g. from A out to directly attached IP/MPLS router(s) etc.) - and the minimum is then selected as bandwidth on the connection point.

Hereafter, the selected VN is announced including the available link bandwidths out into the IP/MPLS router network as a representative for OTN and thereby ends in the distributed topology database which is present in the IP/MPLS routers.

A further aspect of the invention relates to a system for the scheduling of data traffic in the communications systems. The system can partly be used in cell based systems (e.g. ATM), partly in package based systems (IP, MPLS/GMPLS, frame-relay etc.). The system comprises a queue system, a control unit, a delay unit and a priority unit.

Numerous different methods exist for scheduling data traffic. The object of these is to control the order, whereby the data cells or data packages in a digital communications system are sent to a data channel, and thereby fix an order of priority between different data flows or control data profiles for the individual data flows.

Examples of mechanisms or techniques are:
Generalised Processor Sharing (GPS)
Weighted fair queuing (WFQ)
Weighted round robin (WRR)
where virtual time is operated with. These mechanisms can give a relative order of priority of a number of data flows in relation to each other. A data flow can for instance be given the double amount of bandwidth of another data flow. Thus, the regulation of the individual flows takes place relatively compared to the rest of the data flows. In the following such a unit will be mentioned a priority unit, an order of priority being mainly given between a number of data flows.

Other mechanisms operate with absolute time and are capable of carrying out an absolute control of those bandwidths that the individual data flows are given. By way of example, one data flow is given 2 Mbps and another data flow is given 3 Mbps. The regulation of the individual data flows thus takes place on the basis of absolute criteria, which are independent of the rest of the data flows. In the following, such a unit is called a delay unit. A delay is mainly being carried out between the individual cells or packages.

There will often be a wish of simultaneously aiming at both absolute criteria and relative criteria. It can be for instance that data flow A must have two times as large bandwidth as data flow B; but that data flow A can at a maximum be transmitted with 2 Mbps and data flow B can at a maximum be transmitted with 3 Mbps. At the same time, requirements can be made as to a minimum of bandwidth, data flow A thus having a guaranteed bandwidth of 1 Mbps, while data flow B has no guaranteed bandwidth.

A typical utilisation of such a system is for ATM ABR service, where a fair distribution of the bandwidth between a number of data flows is wanted, but where the flow control mechanism (controlled through RM cells in the opposite direction of the data traffic) sets a limit to the bandwidth of the individual data flows.

The invention relates to a system which makes it possible at the same time to control data flows according to both absolute and relative criteria.

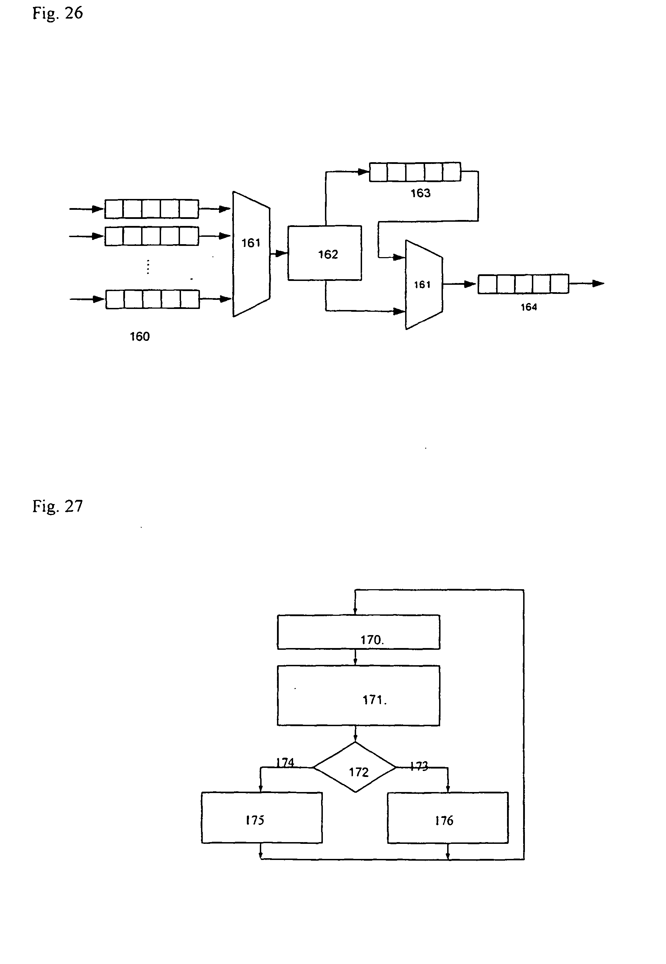

Fig. 26 shows this system for scheduling data traffic according to the present invention.

Fig. 27 shows the algorithm for the distribution of data traffic between delay unit and priority unit.

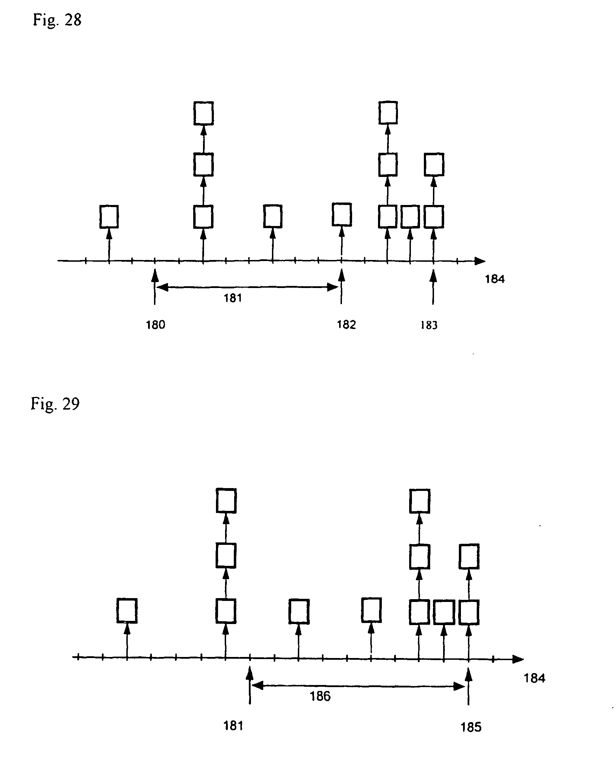

Fig. 28 shows a possible implementation of the delay unit.

Fig. 29 shows a possible implementation of the priority unit.

### The system according to the invention comprises the following elements:

Queue system giving the possibility of having a FIFO queue per data flow or traffic class. Control unit for the distribution of traffic between numerous distribution and priority units.

Delay unit for the timely distribution of data packages (shaping).
Priority unit enabling a possibility of putting data flows in order of priority.

By implementing digital communication systems a central buffer system is typically used for the storage of the data packages, hereby operating with pointers for packages instead of using the packages themselves in the queue system etc. It is only in connection with the transmission that the data packages will be read from the central buffer system. When the data packages will be mentioned in the following description it might as well be pointers for data packages which are being described, or alternatively pointers for queues in the queue system, in which these pointers are hidden.

Data cells or packages which are received by the switch system will, after a possible switching or routing (which is not part of this description), be input to one or more queues in the queue system 160. Each queue in the system represents different data flows which are wished to be mutually regulated. It can be either individual data flows or traffic classes. In the following only one system is treated with a single transmission channel.

Traffic is output from the queue system through the multiplexer 161. This multiplexer will typically be part of the queue system and will thus not exist as an independent logic unit.

After the output of a data package from the queue system the package will be input into either the delay unit 163 or into the priority unit 164.

As time goes by and capacity becomes available on the data channel data packages will be output and transmitted from the priority unit. The priority unit operates with virtual time, the result being thus that a data package will always be output unless the priority unit is completely empty.

Data packages from the delay unit will not be transmitted immediately, but will instead be transmitted to the priority unit through the multiplexer 161 as data packages become ready for output. As the delay unit operates with absolute time, several data packages can be ready for output at the same time. It is possible to make a less resource demanding implementation where it is only possible to output at a limited speed.

The delay unit 163 and the priority unit 164 will together consist of one single data package as a maximum from each queue in the queue system. Every time a package is output from the priority unit, a new package belonging to the same queue in the queue system will be read and transmitted to either the delay unit or the priority unit, unless this queue is empty.

If a package arrives to a queue in the queue system for which no data package exists in the delay unit or the priority unit, the data package will be directly transmitted to the delay unit or the priority unit.

For distributing the data packages, which are output from the queue system between the delay unit and the priority unit, a control unit 162 is used. The control unit 162 also determines the delay, which is used at the input in the delay unit. The control unit will typically comprise a Leaky Bucket algorithm for each queue in the queue system.

Continuous-state Leaky Bucket has to state variable bucket-level and time-stamp which are updated each time a data package is output from the queue system. In Fig. 27 is shown a flow diagram for this algorithm.

Data packages which are input in the delay unit are time stamped with the value
time + delay_time
where time indicates the time (in the form of a continuous counter) and delay_time indicates the wanted delay of time. Data packages are output again when the value of time exceeds the time stamp of the package. If an output can not take place at an arbitrarily high speed, the data package with the lowest time stamp is to be output first.

Data packages that are input in the priority unit are time stamped with the value
virtual_time + 1/w(i)
where virtual_time indicates a virtual time and W(i) indicates the priority for the current data flow. Data packages are output at the speed at which they can be transmitted over the data channel, the virtual_time is sequentially set to the time stamp for the last output data package.

If there instead of giving an order of priority at the package level is given an order of priority in relation to used bandwidth, thus regarding the length of each package, an implementation where the time stamp is set to
virtual_time + package_length / w(i)
can be used, where package_length indicates the length of the current package.

When implementing the delay unit and the priority unit, a solution as shown in Fig. 28 and Fig. 29 will typically be used.

System for scheduling data traffic, in which the data packages are distributed by a control unit between several scheduling units with different characteristics.

Unity for the distribution of data traffic between several scheduling units, in which one or more "leaky bucket" algorithms are used for the distribution of the data packages between the scheduling units.

System for the scheduling of data traffic where bucket_level from "leaky bucket" algorithms are used for the delay of data traffic prior to further treatment in the system.

System for the scheduling of data traffic, in which a delay unit is followed by one or more priority units.

### Appendix A Definition list on technical abbreviations

This paragraph defines a number of technical concepts and terms which are used in the document.

| **Word** | **Description** |
|---|---|
| AAL5 | A package transport form in ATM. |
| The Access net | The part of the telecommunications infrastructure connecting the private companies and the users to the telecommunications infrastructure |
| ADSL | Asymmetric Digital Subscriber Line - A technology using the existing telephone lines out to the private homes. |
| ASIC | Application Specific Integrated Circuit - Integrated circuit developed for a specific purpose. |
| ANSI | Organisation standardising the American telecommunications protocols, among others the Sonet. |
| ATM | Asynchronous Transfer Mode. An electronic data protocol which is widespread in the Access net of the telecommunications infrastructure. |
| CMOS | ASIC technology for digital circuits. |
| DWDM | Dense Wavelength Division Multiplexing - A technology for sending via several frequencies (colours) in one fibre thereby increasing the entire capacity per fibre. |
| Edge Router | An IP Router which can convert to/from MPLS/GMPLS. |
| Ethernet | The most widespread electronic transport protocol which within the companies' local network is used to connect PC's, servers etc.. |
| FPGA | Field Programmable Fate Array. A hardware component which can be programmed contrary to an ASIC. Has lower performance and integration possibilities than an ASIC. |
| Frame Relay | An older electronic data protocol which is widespread within the Access net of the telecommunications structure. |
| GFP | Generic Framing Procedure. A new protocol for the mapping of packages within SDH/Sonet. |
| GMPLS | Generalised Multi Protocol Label Switching. A further development of MPLS so it also can be used in ADH/Sonet based networks. |
| IEEE | Organisation standardising the Ethernet protocols. |
| IETF | Organisation standardising the Internet protocols, among others IP, MPLS and GMPLS. |
| ITU | Organisation standardising telecommunications protocols, among others SDH. |
| IP | The basic electronic network protocol being among other things used in the Internet to transport data packages. |
| IPdiff.service | An expansion to the IP protocol so that several types of traffic with different time requirements (data, telephony, video) can be sent over the same line, i.e. where different priorities can be given to the individual packages. |
| LSR | Label Switch Router. A very quick package switch based on the MPLS/GMPLS protocol. |
| LAN | Local network. Typically used in a company to connect among others PC's and servers. |
| MPLS | Multi Protocol Label Switching. The next generation's protocol being a further development of the IP and which has the necessary scalings quality for the Internet in order to meet the new requirements on speed and minimum delays for new IP services -among others Internet telephony based on IP. |
| OC48 | Line interface in Sonet with a speed of 2.5 Gigabit/s in each direction. |
| OC192 | Line interface in Sonet with a speed of 10 Gigabit/s in each direction. |
| OSI management | The protocol which is most often used by the teleoperators in connection with the supervision of the telecommunications transmission equipment. |
| OSPF | Open Shortest Path First. One of the large software IP routing protocols which are used in IP routers to distribute knowledge about the topology in an IP network. |
| Policing | An electronic package receiving mechanism controlling that a given sender does not transmit more than agreed. |
| PPP | Point to Point Protocol. A protocol for the establishing of IP point to point connections. |
| RSVP | Resource Reservation Protocol. A software protocol used in the IP routers to reserve bandwidth etc. |
| SDH | Synchronous Digital Hierarchy the underlying electronic transport protocol which is used today in the European part of the telecommunications infrastructure. |
| Shaping | An electronic transmissions mechanism ensuring that as an average, the transmissions take place at a specifically indicated speed. |
| SNMP | Simple Network Management Protocol. The protocol which is most often used to supervise LAN equipment. |
| Sonet | Synchronous Optical Network. The underlying electronic transport protocol which is used today in the American part of the telecommunications infrastructure. |
| STM16 | Line interface in SDH with a speed of 2.5 Gigabit/s in each direction. |
| STM64 | Line interface in SDH at a speed of 10 Gigabit/s in each direction. |
| Terabit/s | 1000 Gigabit/s. |
| The transport part of the telecommunications infrastructure | The basic telecommunications network connecting all cities and areas in the world and which is used to transport telephony and data. |
| The trunk net | The backbone in the telecommunications network. The part of the telecommunications structure which connects territories, cities and countries. |
| VC3, VC4, VC4c | Different types of logic channels in SDH/Sonet. |
| VLAN | Virtual LAN. Defined in IEEE and used on the Ethernet to support several LAN's through the same cable. |
| VPN | Virtual Private Network. A company's virtual IP network through the public infrastructure. It is virtual because all the companies' VPN are based on the same public IP infrastructure without traffic being intermingled between the firms. |

### Appendix B References in Figs. 1-29

| **Figure Text** | **Description** |
|---|---|
| 1 | Central Management Centre |
| 2 | GMPLS Software |
| 3 | GMPLS software server |
| 4 | GMPLS topology and reservation packages sent or controlled by Central Management Centre |
| 5 | IP Router |
| 6 | SDH/SonetAdd/Drop Multiplexer or similar SDH/Sonet product |
| 7 | SDH/Sonet Net Work |
| 8 | GMPLS Channel through SDH/Sonet net work |
| 9 | User |
| 10 | Web Host |
| 11 | ADSL connection |
| 12 | Access part of SDH/Sonet net work |
| 13 | Backbone part of SDH/Sonet net work |
| 14 | DSLAM |
| 15 | Fibre based rings based on DWDM and SPH/Sonet |
| 16 | TCP or business |
| 17 | IP |
| 18 | AAL5 |
| 19 | ATM |
| 20 | DWDM product |
| 21 | ATM switch |
| 22 | SDH/Sonet |
| 23 | ADSL |
| 30 | Connection between two IP routers through SDH/Sonet net work |
| 31 | Similar to 30, however having increased band width as compared to 30 |
| 40 | Package Forwarding in Hardware |
| 41 | Package Forward table or scheme |
| 42 | Router Software |
| 43 | OSPF topology data base |
| 44 | IP Packages |
| 95 | IP/MPLS Router |
| 96 | GMPLS enabled product of the type 6 or 20 |
| 100 | MPLS Package belonging to a dynamic MPLS tunnel |
| 101 | Connection between two IP/MPLS routers through SDH Sonet |
| 110 | Each individual byte from a package sent in specific timeslots, belonging to the dynamic GMPLS based SDH/Sonet tunnel |
| 120 | Tunnels being byte interleaved |
| 121 | Tunnels being package interleaved |
| 122 | Byte in dynamic GMPLS SDH/Sonet tunnel |
| 123 | MPLS/GMPLS converter |
| 130 | SDH/Sonet management software |
| 131 | GMPLS software including protocols |
| 140 | Example of an arbitrary net work (OTN) including 4 external connections through A, B, C and D |
| 141 | Two different examples of simple Virtual Net works (VN) hiding the topology of optical net work (OTN), however preserving the same external connection through A, B, C and D |
| 142 | Example of a distributed data base, shown visual representing an IP/MPLS net work having 5 IP/MPLS routers and exhibiting free band width per link between IP/MPLS routers |
| 143 | Example similar to 142 after signalling of a connection of 2 Mbit/s between routers 1 and 5. |
| 144 | Example of a physical IP/MPLS net work comprising 6 IP/MPLS routers, the routers 2,3,4 and 5 in this example being connected through an inner complex optical net work (OTN) - connected through A, B, C and D |
| 145 | Example of a Virtual net work (VN) representing an optical net work (OTN) having 4 external connections A, B, C and D |
| 146 | Mapping of free band width |
| 160 | Queuing system |
| 161 | Mux |
| 162 | Control unit |
| 163 | Delay unit |
| 164 | Priority unit |
| 170 | Reading of data package from queuing system |
| 171 | dt = time - time_stamp |
| | drain = decrement*dt |
| | bucket_drain = max(0, bucket_level - drain) |
| | bucket_level = bucket_drain + increment*package_length |
| 172 | bucket_level > limit ? |
| 173 | No |
| 174 | Yes |
| 175 | Read data package for delay unit delay = (bucket_level - limit)/ decrement |
| 176 | Read data package for priority unit |
| 180 | Delay |
| 181 | Write index |
| 182 | Current time |
| 183 | Read index |
| 184 | time |
| 185 | Virtual time |
| 186 | Packet_length/w(i) |

## Claims

1. A telecommunications network comprising an optical transport network and a General Multi Protocol Label switching, GMPLS, proxy agent; said optical transport network comprising an SDH/Sonet sub-network;
wherein said GMPLS proxy agent is adapted to dynamically set up one or more SDH/Sonet paths;
wherein said GMPLS proxy agent comprises a GMPLS software server (3) adapted to run GMPLS software for said SDH/Sonet sub-network; and
wherein GMPLS reservation packages for said SDH/Sonet sub-network are collected and forwarded to said GMPLS software server.

2. The telecommunications network according to claim 1, **characterised in that**, in an external limit of the SDH/Sonet sub-network, units are provided for the collecting of said GMPLS reservation packages, wherein said units are adapted to communicate with the network outside the SDH/Sonet sub-network on behalf of the SDH/Sonet sub-network.

3. The telecommunications network according to claim 2, **characterised in that** said units are constituted by MPLS/GMPLS enabler cards.

4. The telecommunications network according to claim 1, **characterised in that** the GMPLS software server (3) in relation to an external IP/MPLS network is adapted to make GMPLS tunnels into the SDH/Sonet sub-network available for said external IP/MPLS network.

5. The telecommunications network according to one of claims 1 to 4, wherein said optical transport network further comprises at least one of SDH/Sonet Add/Drop multiplexers (6) and DWDM multiplexers.

## Patentansprüche

1. Telekommunikationsnetzwerk, umfassend ein optisches Transportnetzwerk und einen GMPLS-Proxy-Agenten (General Multi Protocol Label Switching proxy agent), wobei das optische Transportnetzwerk ein SDH/SONET-Subnetzwerk umfasst,
wobei der GMPLS-Proxy-Agent eingerichtet ist, um einen oder mehrere SDH/SONET-Pfade aufzubauen,
wobei der GMPLS-Proxy-Agent einen GMPLS-Software-Server (3) umfasst, der eingerichtet ist, um GMPLS-Software für das SDH/SONET-Subnetzwerk auszuführen, und
wobei GMPLS-Reservierungspakete für das SDH/SONET-Subnetzwerk erfasst werden und an den GMPLS-Software-Server weitergeleitet werden.

2. Telekommunikationsnetzwerk nach Anspruch 1, **dadurch gekennzeichnet, dass** an einer externen Grenze des SDH/SONET-Subnetzwerkes Einheiten zum Erfassen von GMPLS-Reservierungspaketen bereitgestellt sind, wobei die Einheiten eingerichtet sind, um mit dem Netzwerk außerhalb des SDH/SONET-Subnetzwerkes im Auftrag des SDH/SONET-Subnetzwerkes zu kommunizieren.

3. Telekommunikationsnetzwerk nach Anspruch 2, **dadurch gekennzeichnet, dass** die Einheiten durch MPLS/GMPLS-Enabler-Karten gebildet werden.

4. Telekommunikationsnetzwerk nach Anspruch 1, **dadurch gekennzeichnet, dass** der GMPLS-Software-Server (3) in Beziehung zu einem externen IP/MPLS-Netzwerk eingerichtet ist, um in dem SDH/SONET-Subnetzwerk GMPLS-Tunnel für das externe IP/MPLS-Netzwerk verfügbar zu machen.

5. Telekommunikationsnetzwerk nach einem der Ansprüche 1 bis 4, wobei das optische Transportnetzwerk des Weiteren wenigstens eines von SDH/SONETAdd/Drop-Multiplexern (6) und DWDM-Multiplexern umfasst.

## Revendications

1. Réseau de télécommunications comprenant un réseau de transport optique et un fournisseur de service GMPLS (General Multi Protocol Label switching) ; lequel réseau de transport optique comprend un sous-réseau SDH/Sonet ;
étant précisé que le fournisseur de service GMPLS est apte à installer de manière dynamique une ou plusieurs trajectoires SDH/Sonet ;
que le fournisseur de service GMPLS comprend un serveur pour logiciel GMPLS (3) apte à exécuter un logiciel GMPLS pour le sous-réseau SDH/Sonet ; et
que les ensembles de réservations GMPLS pour le sous-réseau SDH/Sonet sont réunis et sont transmis au serveur pour logiciel GMPLS.

2. Réseau de télécommunications selon la revendication 1, **caractérisé en ce que** dans une limite extérieure du sous-réseau SDH/Sonet, des unités sont prévues pour réunir les ensembles de réservations GMPLS, ces unités étant aptes à communiquer avec le réseau à l'extérieur du sous-réseau SDH/Sonet au nom de ce dernier.

3. Réseau de télécommunications selon la revendication 2, **caractérisé en ce que** lesdites unités sont constituées par des cartes enabler MPLS/GMPLS.

4. Réseau de télécommunications selon la revendication 1, **caractérisé en ce que** le serveur pour logiciel GMPLS (3), en relation avec un réseau IP/MPLS extérieur, est apte à faire des tunnels GMPLS dans le sous-réseau SDH/Sonet disponible pour le réseau IP/MPLS extérieur.

5. Réseau de télécommunications selon l'une des revendications 1 à 4, dans lequel le réseau de transport optique comprend également des multiplexeurs SDH/Sonet Add/Drop (6) et/ou des multiplexeurs DWDM.
